Europäisches Patentamt

**European Patent Office**

**Office européen des brevets**

(19)

(11) Numéro de publication: **0 118 337**
**B1**

(12) # FASCICULE DE BREVET EUROPÉEN

(45) Date de publication du fascicule du brevet:
23.07.86

(51) Int. Cl.⁴: **F 16 D 55/224**

(21) Numéro de dépôt: **84400228.7**

(22) Date de dépôt: **02.02.84**

(54) **Frein à disque.**

(30) Priorité: 02.02.83 FR 8301621

(43) Date de publication de la demande:
12.09.84 Bulletin 84/37

(45) Mention de la délivrance du brevet:
23.07.86 Bulletin 86/30

(84) Etats contractants désignés:
**DE GB IT NL SE**

(56) Documents cité:
FR-A-2 272 298
FR-A-2 290 607
GB-A-1 546 727
GB-A-2 017 236
GB-A-2 030 666

(73) Titulaire: **BENDIX France, 126, rue de Stalingrad,
F-93700 Drancy (FR)**

(72) Inventeur: **Méry, Jean- Claude, 61 rue Emile Zola,
F-93320 Pavillons S/Bois (FR)**

(74) Mandataire: **Poidatz, Emmanuel, Service Brevets
Bendix 44 rue François 1er, F-75008 Paris (FR)**

LIBER, STOCKHOLM 1986

## Description

La présente invention concerne un frein à disque du type comportant un support fixe ou chape muni d'au moins un flasque latéral et de bras extrêmes présentant des logements de guidage transversaux, un disque rotatif de frein disposé à côté d'au moins un flasque latéral du support fixe et coiffé par au moins un des bras extrêmes du support fixe, une paire de patins de friction disposés de part et d'autre du disque de frein et munis chacun d'une plaque-porte-garniture dont au moins une des extrémités est montée et guidée parallèlement à l'axe du disque de frein dans l'un des logements transversaux de guidage ainsi qu'un étrier qui, d'une part, coiffe les patins de frictions et la partie correspondante du disque de frein et qui, d'autre part, à l'aide d'une colonnette unique, est monté sur le support fixe de façon à pouvoir se déplacer parallèlement à l'axe du disque de frein sous l'effet d'un moteur incorporé audit étrier, cet étrier présentant, en outre, sur le côté associé au patin extérieur, un moyen de verrouillage tel qu'un boulon fileté, dont l'extrémité libre coopère avec la plaque-porte-garniture extérieure de façon à empêcher tout pivotement intempestif de l'étrier.

Ce type de frein à disque est connu par exemple par le brevet GB 1.546.727. Dans ce cas, le support fixe porte les deux extrémités de chacune des deux plaques-porte-garnitures et les deux bras d'extrémité du support fixe s'étendent par-dessus le trajet du disque de frein, le montage de la colonnette étant réalisé dans la partie transversale des bras d'extrémité. De ce fait, la colonnette est située à un emplacement ne disposant que d'un volume réduit de sorte que, d'une part, les dimensions de la colonnette sont réduites et son emplacement relativement éloigné de la zone d'application des forces de frottement. Il en résulte des déformations fréquentes de la colonnette et un fonctionnement défectueux de frein, notamment une usure en biais des patins de friction. Ces inconvénients sont encore aggravés lorsque le support fixe est dissymétrique.

La présente invention a pour but de supprimer ces inconvénients.

Dans le cas d'un frein à disque du type précité et comportant un support fixe ou chape, dans lequel sont montées coulissantes parallèlement à l'axe du disque de frein les deux extrémités des deux plaques-porte-garnitures, ce but est atteint du fait que la colonnette unique, vue dans le sens de la marche avant, est disposée en face de la partie extrême arrière du patin de friction intérieur, de telle sorte que sa projection orthogonale sur le disque frein se trouve au moins partiellement sur le trajet de celui-ci et pris dans le sens de la marche légèrement en aval du logement de guidage correspondant pratiqué dans le support fixe.

Grâce à cette conception, on peut donc prévoir une grosse colonnette arrière (vue dans le sens de la marche avant) parfaitement protégée et ne passant pas au-dessus du disque de frein. Il n'y a donc pas de problèmes d'encombrement, de chaleur, de projection de saletés, etc.

Dans le cas d'un frein à disque du type initialement défini et comportant un support fixe, ou chape dissymétrique, dont la projection en plan présente une forme en L et dans lequel seulement l'extrémité avant de la plaque-porte-garniture du patin extérieur prend appui sur le support fixe en marche avant, ce but est également atteint du fait que la colonnette unique, vue dans le sens de la marche avant, est disposée en face de la partie extrême arrière du patin de friction intérieur de telle sorte que sa projection orthogonale sur le disque de frein se trouve au moins partiellement sur le trajet de celui-ci et, pris dans le sens de la marche avant, légèrement en aval du logement de guidage correspondant pratiqué dans le support fixe et qu'en outre l'étrier comprend, du côté associé au patin extérieur, un moyen de suspension amovible susceptible de coopérer avec la partie extrême arrière de la plaque-porte-garniture du patin extérieur.

Avantageusement, l'étrier remplit dans ce cas une fonction de support partiel du patin extérieur dont l'extrémité avant, vue dans le sens de la marche avant, est guidée transversalement dans le logement de guidage du support fixe, logement contre le fond duquel elle prend appui.

Le moyen de suspension arrière peut aussi jouer le rôle d'un élément de blocage en pivotement de l'étrier autour de l'axe de la colonnette lorsque ledit moyen de suspension n'est pas disposé dans l'axe de ladite colonnette.

Dans certains cas, il est avantageux de séparer la fonction de blocage de la fonction de suspension et d'attribuer la fonction de blocage au moyen de verrouillage avant et d'attribuer la fonction, de suspension de l'extrémité arrière de patin extérieur au moyen de suspension amovible. A cet effet, le moyen de suspension arrière est disposé coaxialement à l'axe de la colonnette dans un trou de passage prévu dans le nez de l'étrier, l'extrémité libre intérieure dudit moyen de suspension arrière étant susceptible de pénétrer et d'être fixée dans un évidement correspondant pratiqué dans la partie extrême de la plaque-porte-garniture du patin extérieur.

Le moyen de suspension est constitué avantageusement par un boulon fileté dont la partie filetée se visse dans l'évidement taraudé de la plaque-porte-garniture du patin extérieur.

Afin de réduire les problèmes d'usinage précis, il est avantageux de donner aux trous de passage ménagés dans le nez de l'étrier et destinés au montage du boulon de verrouillage avant et du boulon de suspension arrière un certain jeu horizontal latéral $\Delta L$ pour permettre une faible variation de l'entr'axe $L$ entre les évidements taraudés extrêmes prévus dans la plaque-porte-garniture du patin extérieur et destiné à recevoir sans jeu les extrémités filetées du boulon de verrouillage, d'une part, et du boulon de suspension, d'autre part.

L'objet de l'invention sera encore mieux compris à l'aide de la description suivante de deux modes de réalisation illustrés sur le dessin annexé sur lequel:

— la figure 1 est une vue en plan d'un frein à disque ayant un support fixe ou chape symétrique;

— la figure 2 est une vue en plan d'un frein à dique ayant un support fixe ou chape dissymétrique;

— la figure 3 est une vue en élévation partiellement en copue du frein à disque suivant la flèche III des figures 1 et 2; et

— la figure 4 est une vue en élévation d'une coupe radiale verticale du frein à disque suivant la ligne IV—IV des figures 1 à 3.

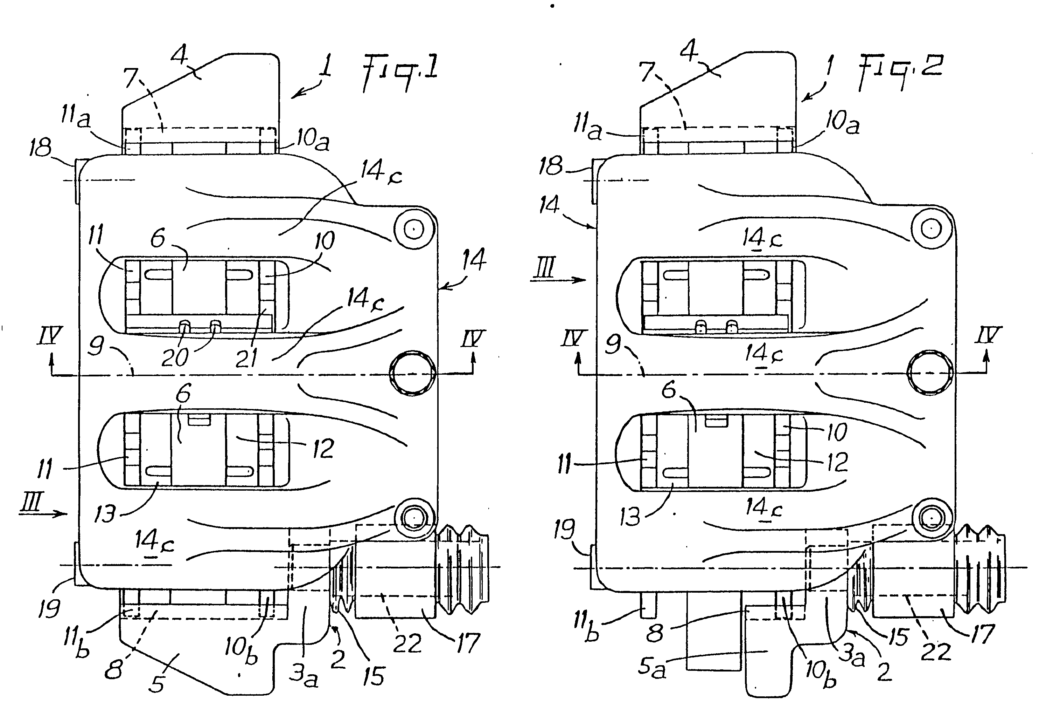

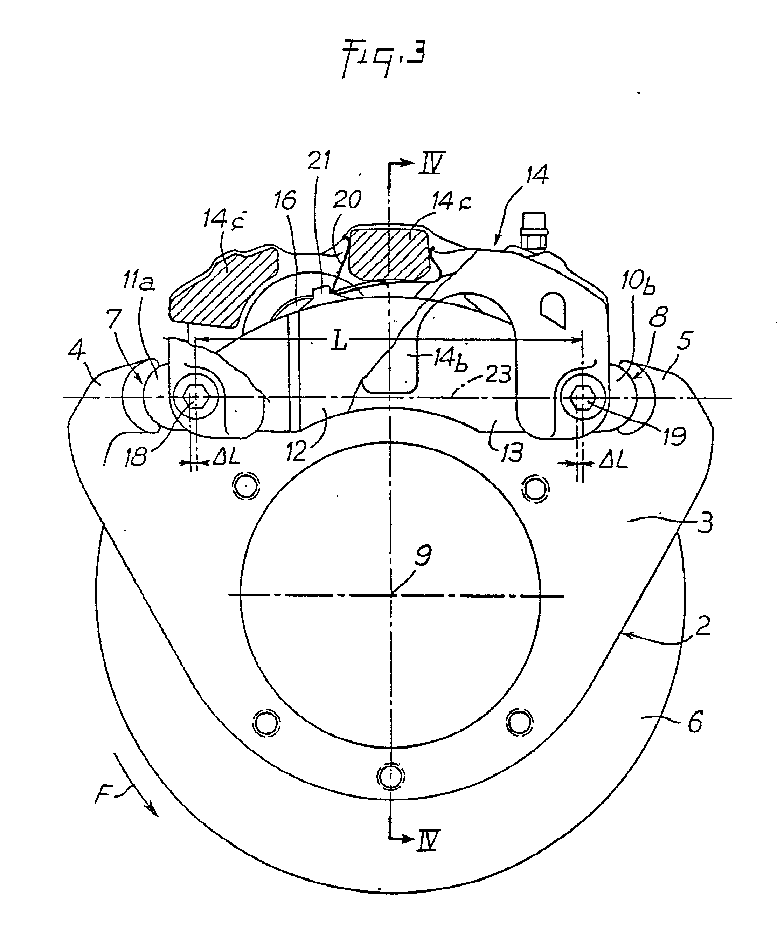

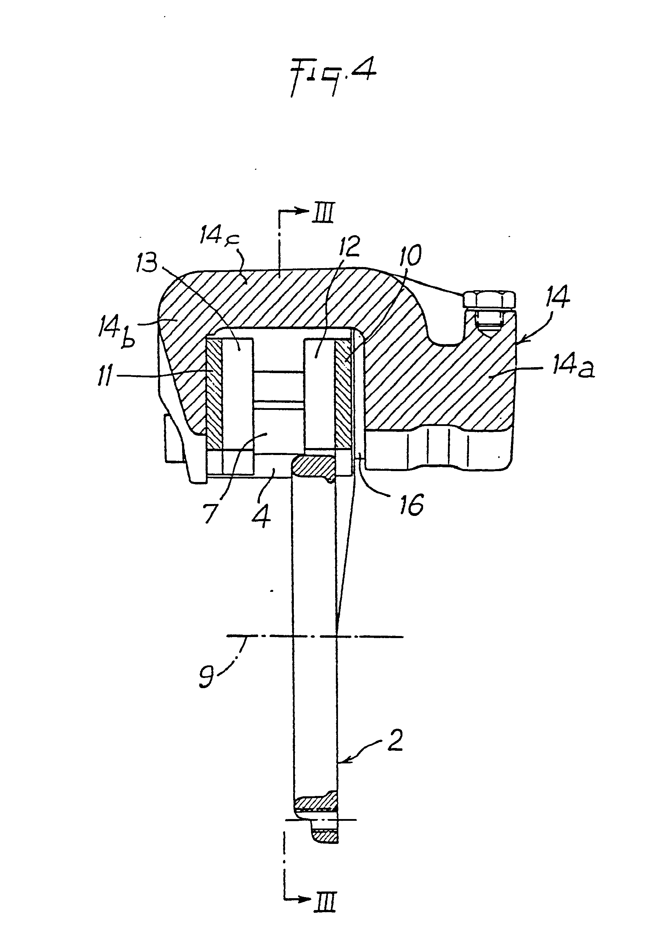

Le frein à disque 1 tel que représenté sur le dessin comprend un support fixe ou chape 2 qui, vu en plan, peut avoir une forme symétrique ressemblant à un U (figure 1) ou dissymétrique ressemblant à un L (figure 2). Ce support fixe 2 comprend un flasque latéral 3 muni, à sa partie supérieure, de bras extrêmes 4, 5 qui, dans le cas d'une chape symétrique (figure 1), s'étendent tous les deux par-dessus et de part et d'autre du disque de frein 6 monté de façon rotative à côté du flasque latéral 3 du support fixe 2 et, dans le cas d'une chape dissymétrique, possèdent un bras arrière raccourci 5a qui ne s'étend transversalement à partir du flasque latéral 3, définissant le côté intérieur du frein 1, que jusqu'à la face latérale intérieure du disque de frein 6.

Les bras extrêmes 4,5 présentent, en face du pourtour du disque de frein 6, des logements de guidage transversaux 7, 8 qui s'étendent parallèlement à l'axe 9 du disque de frein 6 et qui reçoivent les extrémités de préférence arrondies des plaques-porte-garnitures 10 et 11 des patins de friction 12, 13 disposés de part et d'autre du disque de frein. Dans le cas d'une chape symétrique (figure 1), les deux extrémités 10a, 10b et 11a, 11b aussi bien du patin intérieur 12 que du patin extérieur 13 sont guidées et supportées par les logements de guidage 7, 8 du support fixe ou chape 2. Par contre, dans le cas d'une chape dissymétrique (figure 2), l'extrémité arrièrre 11b de la plaque porte-garniture 11 du patin extérieur 13 n'est pas directement supportée par le support fixe ou chape 2.

Le frein à disque 1 comporte aussi un étrier 14 qui coiffe les plaques-porte-garnitures 10, 11 avec leurs patins de friction 12, 13 ainsi que la partie correspondante du disque de frein 6 et qui, à l'aide d'une colonnette unique 15, est monté sur le support fixe 2 de façon à pouvoir se déplacer en translation parallèlement à l'axe de la colonnette 15 qui est parallèle à l'axe 9 du disque annulaire de frein 6 et de façon à pouvoir pivoter autour de l'axe de ladite colonnette 15. Sur le côté intérieur 14a, l'étrier 14 comprend un moteur, tel qu'un vérin 16 dont la partie mobile par rapport à l'étrier 14 agit directement sur la plaque-porte-garniture 10 du patin intérieur 12. Le côté extérieur 14b de l'étrier 14 est constitué, par exemple, par un flasque vertical ajouré dénommé nez qui sert d'appui transversal à la plaque-porte-garniture 11 du patin extérieur 13 et qui, à sa partie supérieure, est relié au côté intérieur 14a de l'étrier 14 par plusieurs bras de liaison 14c, par exemple, au nombre de trois.

Vu dans le sens de la marche avant (voir sens de rotation du disque 6 indiqué par la flèche F), la colonnette 15 est montée sur la partie extrême arrière du côté intérieur 14a de l'étrier 14, en face d'une partie supérieure 3a du flasque latérale 3, partie supérieure 3a qui est coiffée par la partie arrière extrême évidée de l'étrier 14.

Une extrémité de la colonnette 15 peut être fixée sur la partie supérieure 3a du flasque latéral 3 et le reste de la colonnette 15 peut coulisser dans un alésage de guidage 22 prévu dans une oreille extrême 17 de l'étrier 14. En outre, la colonnette unique 15 est disposée en face de la partie extrême arrière du patin de friction intérieur 12 et pratiquement à l'intérieur de la projection du pourtour de l'étrier 14 parallèlement à l'axe du disque de frein 6 ou de la colonnette 15. En outre, la disposition de la colonnette 15 est telle que la projection orthogonale de celle-ci sur le disque de frein 6 (donc parallèle à l'axe de celui-ci) se trouve au moins partiellement, et de préférence totalement, sur le trajet dudit disque 6 et légèrement en aval du logement de guidage arrière 8 prévu dans le bras extrême transversal arrière 5 du support fixe 2.

En raison du montage pivotant de l'étrier 14 sur la colonnette 15, on prévoit un moyen de verrouillage 18, de préférence à proximité de l'extrémité avant de l'étrier 14. Ce moyen de verrouillage 18 comprend, par exemple, un boulon dont l'extrémité libre est filetée, traverse un trou de passage ménagé parallèlement à l'axe 9 du disque 6 dans la partie avant du flasque extérieur 14b de l'étrier et est vissée dans un alésage taraudé correspondant de la plaque-porte-garniture 11 du patin extérieur 13. Comme au moins l'extrémité avant 11a de la plaque-porte-garniture extérieure 11 est retenue dans son logement de guidage 7 contre tout mouvement de pivotement, l'étrier 14 est également empêché de pivoter aussi longtemps qu'il est relié à la plaque-porte-garniture extérieure 11 et, par l'intermédiaire de celle-ci, au support fixe 2.

Comme précédemment mentionné, l'extrémité arrière 11b de la plaque-porte-garniture extérieure 11 n'est pas supportée directement par le support fixe 2 lorsque l'on emploie une chape dissymétrique (figure 2).

Dans ce cas, on prévoit sur le côté extérieur 14b de l'étrier 14' un moyen de suspension amovible 19 qui est susceptible de coopérer avec la partie extrême arrière de la plaque-porte-garniture extérieure 11, à un endroit qui est situé soit en avant de l'axe de la colonnette 15, soit dans l'axe de celle-ci.

Le moyen de suspension 19 est avantageusement constitué par un boulon fileté qui traverse un trou de passage correspondant ménagé dans la partie arrière du nez 14b de l'étrier 14 et qui se visse dans un alésage taraudé correspondant de la plaque-porte-garniture extérieure 11.

Etant donné que la plaque 11 est déjà maintenue dans le logement de guidage avant 7, elle établit aussi la liaison entre l'étrier 14 et le support fixe 2 lorsque l'étrier 14 est relié à cette plaque 11 par le moyen de suspension arrière 19.

Dans ce cas, ce moyen 19 remplit aussi bien la fonction de support partiel de la plaque-porte-garniture extérieure 11 que la fonction de verrouillage de l'étrier 14 contre tout mouvement de pivotement. Par contre, lorsque l'on place le boulon de suspension 19 dans un trou de passage du nez 14b de l'étrier 14, trou qui se trouve dans l'axe de la colonnette 15, alors ledit boulon 19 ne remplit que la fonction de suspension de la plaque-porte-garniture extérieure 11 lorsque son extrémité filetée est vissée dans un alésage correspondant de ladite plaque 11, car le pivotement de l'étrier 14 ne peut être empêché par un moyen situé dans l'axe de la colonnette 15. De ce fait, il peut être avantageux d'employer d'une part, le boulon 18 pour le verrouillage de l'étrier 14 et, d'autre part, le boulon 19 pour la suspension de la plaque-porte-garniture extérieure 11, ce boulon 19 et son trou de passage correspondant étant coaxiaux à la colonnette 15. Dans ce cas, le patin extérieur 13 et le boulon de suspension 19, peuvent rester en place lorsque l'on désire seulement faire pivoter l'étrier. Il est recommandé de prévoir entre la face interne de chacun des deux trous de passage pratiqués dans le nez de l'étrier 14, et la tige du boulon de verrouillage 18 ou du boulon de suspension 19 un certain jeu latéral horizontal ΔL de sorte que chacun de ces deux trous présente une section ovale et que l'entr'axe L entre les deux évidements taraudés correspondants de la plaque-porte-garniture extérieure 11 puisse varier légèrement. Ainsi peuvent être compensées les imprécisions d'usinage et de montage ainsi que les dilatations thermiques éventuelles.

On remarquera encore que le plan médian de symétrie 23 des logements transversaux de guidage 7, 8 comprend, de préférence aussi, les axes des trous de passage pour les boulons de verrouillage 18 et de suspension 19 ainsi que l'axe de la colonnette 15.

Pour éviter les bruits de claquage des plaques-porte-garnitures 10, 11 dans leurs logements avant correspondants 7, on prévoit un ressort 20 qui est monté par exemple sur le bras intermédiaire 14c de l'étrier et qui, en prenant appui contre un ergot 21 solidaire de la plaque 10 ou 11 sollicite l'extrémité avant 10a ou 11a de celle-ci contre la paroi intérieure du logement correspondant 7.

Les différents modes de réalisation précédemment décrits peuvent subir un certain nombre de modifications sans que l'on sorte pour autant du cadre de protection défini par les revendications annexées.

**Revendications**

1. Frein à disque du type comportant un support fixe ou chape (2) muni d'au moins un flasque latéral (3) et de bras extrêmes (4, 5) présentant des logements de guidage transversaux (7, 8), un disque rotatif de frein (6) disposé à côté d'au moins un flasque latéral (3) du support fixe (2) et coiffé par au moins un des bras extrêmes (4, 5) du support fixe (2), une paire de patins de friction (12, 13) disposés de part et d'autre du disque de frein (6) et munis chacun d'une plaque porte-garniture (10 ou 11) dont au moins une des extrémités (10a, 10b ou 11a, 11b) est montée et guidée parallèlement à l'axe (9) du disque de frein (6) dans l'un des logements transversaux de guidage (7, 8) ainsi qu'un étrier (14) qui, d'une part, coiffe les patins de friction (12, 13) et la partie correspondante du disque de frein (6) et qui, d'autre part, à l'aide d'une colonnette unique (15) est monté sur le support fixe (2) de façon à pouvoir se déplacer parallèlement à l'axe (9) du disque de frein (6) sous l'effet d'un moteur (16) incorporé audit étrier (14), l'étrier (14) présentant, en outre, sur le côté extérieur (14b) associé au patin extérieur (13), un moyen de verrouillage (18) tel qu'un boulon fileté, dont l'extrémité libre se visse dans un évidement taraudé de la plaque porte-garniture extérieure (11) de façon à empêcher tout pivotement intempestif de l'étrier (14), caractérisé en ce que la colonnette unique (15), vue dans le sens de la marche avant (F), est disposée en face de la partie extrême arrière du patin de friction intérieur (12) de telle sorte que sa projection orthogonale sur le disque frein (6) se trouve au moins partiellement sur le trajet de celui-ci et, vue dans le sens de la marche légèrement en aval du logement de guidage correspondant (8) pratiqué dans le support fixe (2) et en ce que l'étrier (14) comprend du côté extérieur (14b) un moyen de suspension amovible (19) susceptible de coopérer avec la partie extrême arrière de la plaque porte-garniture extérieur (11) et disposé coaxialement à l'axe de la colonnette (15).

2. Frein à disque selon la revendication 1, caractérisé en ce que, vue en plan, la chape (2) présente la forme d'un L de sorte qu son bras arrière (5) ne s'étend que jusqu'à la face intérieure du disque de frein (6) et que l'extrémité arrière (11b) de la plaque porte-garniture extérieure (11) n'a pas de logement de guidage correspondant.

3. Frein à disque selon l'une des revendications 1 ou 2, caractérisé en ce que le moyen de suspension arrière (19) tel un boulon fileté est disposé dans un trou de passage prévu dans le nez (14b) de l'étrier (14), l'extrémité libre intérieure se vissant dans un évidement taraudé ménagé dans la partie extrême arrière de la plaque porte-garniture (11) du patin extérieur (13).

4. Frein à disque selon l'une des revendications 1 à 3, caractérisé en ce que les deux trous de passage destinés à recevoir respectivement le boulon de verrouillage avant (18) et le boulon de suspension arrière (19) et pratiqués dans les extrémités du nez (14b) de l'étrier (14) présentent un certain jeu horizontal latéral ΔL pour permettre

une faible variation de l'entre'axe L entre les deux évidements taraudés extrêmes prévus dans la plaque porte-garniture du patin extérieur et destinés à recevoir sans jeu les extrémités filetées du boulon de verrouillage (18) d'une part, et du boulon de suspension (19) d'autre part.

5. Frein à disque selon l'une des revendications 1 à 4, caractérisé en ce que le plan médian de symétrie (23) des logements transversaux de guidage (7, 8) comprend les axes des trous de passage pour les boulons de verrouillage (18) et de suspension (19) ainsi que l'axe de la colonnette (15).

## Patentansprüche

1. Scheibenbremse mit einem festgelegten Bremsträger oder -bügel (2), der mit mindestens einer seitlichen Wange (3) und armförmigen Endabschnitten (4, 5) versehen ist, die quer verlaufende Führungen (7, 8) aufweisen, einer umlaufenden Bremsscheibe (6), die auf einer Seite mindestens einer seitlichen Wange (3) des Bremsträgers (2) angeordnet ist und von mindestens einem der Endabschnitte (4, 5) des Bremsträgers (2) übergriffen wird, einem Paar Bremsbacken (12, 13), die beidseitig der Bremsscheibe (6) angeordnet und jeweils mit einer Belagträgerplatte (10 oder 11) versehen sind, wobei mindestens ein Ende (10a, 10b oder 11a, 11b) der Belagträgerplatten parallel zur Achse (9) der Bremsscheibe (6) in der einen der quer verlaufenden Führungen (7, 8) gelagert und geführt ist, und einem Bremssattel (14), der einerseits die Bremsbacken (12, 13) und den entsprechenden Abschnitt der Bremsscheibe (6) übergreift und der andererseits mit Hilfe eines einzigen Bolzens (15) am Bremsträger (2) so gelagert ist, daß er sich parallel zur Achse (9) der Bremsscheibe (6) unter der Wirkung eines im Bremssattel (14) untergebrachten Motors (16) verschieben kann, wobei der Bremssattel (14) außerdem auf der dem äußeren Bremsbacken (13) zugeordneten Außenseite (14b) ein Verriegelungsmittel (18) wie ein Gewindebolzen aufweist, dessen freies Ende in eine Gewindebohrung der äußeren Belagträgerplatte (11) eingeschraubt ist, um eine unbeabsichtigte Schwenkbewegung des Bremssattels (14) zu verhindern, dadurch gekennzeichnet, daß der einzige Bolzen (15)—gesehen in Vorwärtsdrehrichtung (F)—gegenüber dem hinteren Endabschnitt des inneren Reibbackens (12) so angeordnet ist, daß seine orthogonale Projektion auf die Bremsscheibe (6) sich mindestens teilweise auf der Bewegungsbahn der Bremsscheibe befindet und—gesehen in Drehrichtung—geringfügig vor der entsprechenden querverlaufenden Führung (8) im Bremsträger (2) liegt, und daß der Bremssattel (14) auf seiner äußeren Seite (14b) ein entfernbares Aufhängemittel (19) aufweist, das mit dem hinteren Endabschnitt der äußeren Belagträgerplatte (11) zusammenwirkt und koaxial zur Achse des Bolzens (15) verläuft.

2. Scheibenbremse nach Anspruch 1, dadurch gekennzeichnet, daß der Bremsbügel (2) in Draufsicht die Form eines L hat, derart, daß sein hinterer Endabschnitt (5) sich nur bis zur Innenfläche der Bremsscheibe (6) erstreckt und daß das hintere Ende (11b) der äußeren Belagträgerplatte (11) keine entsprechende Führung besitzt.

3. Scheibenbremse nach Anspruch 1 oder 2, dadurch gekennzeichnet, daß das hintere Aufhängemittel (19), das z.B. ein Gewindebolzen ist, in einem Durchgangsloch angeordnet ist, das sich in dem Schenkel (14b) des Bremssattels (14) befindet, wobei das freie innere Ende in eine Gewindebohrung eingeschraubt ist, die in dem hinteren Endabschnitt der Belagträgerplatte (11) des äußeren Bremsbackens (13) gebildet ist.

4. Scheibenbremse nach einem der Ansprüche 1 bis 3, dadurch gekennzeichnet, daß die beiden Durchgangslöcher, die zur Aufnahme des vorderen Verriegelungsbolzens (18) und des hinteren Aufhängebolzens (19) dienen und in den Enden des Schenkels (14b) des Bremssattels (14) gebildet sind, ein gewisses seitliches horizontales Spiel ΔL haben, um eine geringe Toleranz des Achsabstandes L zwischen den beiden äußersten Gewindebohrungen zuzulassen, die in der Belagträgerplatte des äußeren Bremsbackens vorgesehen sind und ohne Spiel die Gewindeenden des Verriegelungsbolzens (18) einerseits und des Aufhängebolzens (19) andererseits aufnehmen.

5. Scheibenbremse nach einem der Ansprüche 1 bis 4, dadurch gekennzeichnet, daß die mittlere Symmetrieebene (23) der quer verlaufenden Führungen (7, 8) die Achsen der Durchgangslöcher für die Verriegelungs- und Aufhängebolzen (18, 19) sowie die Achse des Bolzens (15) enthält.

## Claims

1. A disk brake of the type comprising a fixed support or cap (2) provided with at least one lateral portion (3) and end arms (4, 5) comprising transverse guide surfaces (7, 8), a rotatable brake disk (6) disposed adjacent at least one lateral portion (3) of the fixed support (2) and embraced by at least one of the end arms (4, 5) of the fixed support (2), and a pair of friction members (12, 13) disposed on opposite sides of the brake disk (6) and each provided with a friction layer support plate (10 or 11) having at least one of its ends (10a, 10b or 11a, 11b) mounted and guided parallel to the axis (9) of the brake disk (6) on one of said transverse guide surfaces (7, 8), and a caliper (11) which on the one end straddles the friction members (12, 13) and the corresponding portion of the brake disk (6) and which on the other hand is mounted on the fixed support (2) by means of a single column (15) to be displaced parallel to the axis (9) of the brake disk (6) under the action of a motor (16) incorporated in said caliper (14), the caliper (14) further comprising on the exterior side (14b) associated with the exterior friction member (13) a locking means (18) such as a threaded bolt having its free end threadingly engaged in a tap hole of the exterior friction layer support plate (11) such as to prevent any inadvertent pivotal movement of the caliper (14), characterized in that the single column (15)—as seen in the direction of forward movement (F)—is disposed opposite the rear extreme portion of the interior friction member (12) such that its orthogonal projection onto the brake disk (18) is at least partially on the path of the latter and—as seen in the direction of forward movement—is slightly forward of the corresponding guiding surface (8) provided in the fixed support (2) and in that the caliper (14) comprises on the exterior side (14b) a removable suspension means (19) adapted to cooperate with the rear extreme portion of the exterior friction layer support plate (11) and disposed coaxial to the axis of the column (15).

2. The disk brake of claim 1, characterized in that—as seen in plan view—the cap (2) is of L-shape such that its rear arm (5) extends only to the interior face of the brake disk (6) and the rear end (11b) of the exterior friction layer support plate (11) has no corresponding guide surface.

3. The disk brake of any of claims 1 and 2, characterized in that the rear suspension means (19) such as a threaded bolt is disposed in a through-hole provided in the leg (14b) of the caliper (14), the interior free end threadingly engaging a tap hole provided in the rear end portion of the friction layer support plate (11) of the exterior friction member (13).

4. The disk brake of any of claims 1 to 3, characterized in that the two through-holes adapted to receive, respectively, the forward locking bolt (18) and the rearward suspension bolt (19) and provided in the ends of the leg (14b) of the caliper (14) has a certain lateral horizontal play $\Delta L$ to enable a slight variation of the axial distance $L$ between the two extreme tap holes provided in the friction layer support plate of the exterior friction member and adapted to receive without play the threaded ends of the locking bolt (18) on the one hand and of the suspension bolt (19) on the other hand.

5. The disk brake of any of claims 1 to 4, characterized in that the intermediate plane of symmetry (23) of the transverse guiding surfaces (7, 8) comprises the axes of the through-holes for the locking (18) and suspension (19) bolts as well as the axis of the column (15).

Fig.1

Fig.2

0 118 337

# Fig.3

# Fig.4